# EUROPÄISCHE PATENTANMELDUNG

(11) **EP 4 753 020 A1**
(43) Veröffentlichungstag der Anmeldung: **03.06.2026**
(21) Anmeldenummer: 25205841.7
(22) Anmeldetag: 30.09.2025
(51) Int. Cl.: H01M 10/613, H01M 10/625, H01M 10/6556, H01M 50/30, H01M 10/6568, H01M 50/375

(54) **BATTERIEMODULSYSTEM MIT ENTGASUNGSVORRICHTUNG**

(30) Priorität: 29.11.2024 DE 102024211469
(71) Anmelder: ContiTech Techno-Chemie GmbH, 61184 Karben (DE)
(72) Erfinder: Linzmaier, Markus, 61184 Karben (DE); Sanil, Sachin, 34346 Hann. Münden (DE)
(74) Vertreter: Bird & Bird LLP - Hamburg

(57) **Zusammenfassung**

Die Erfindung betrifft ein Batteriemodulsystem (1), aufweisend ein Batteriemodul (2) mit einer in einem Batteriegehäuse (3) angeordneten Batteriezelle (4), einen Kühlkreislauf (6), der ausgebildet ist, die Batteriezelle (4) mittels eines zirkulierenden Kühlmediums zu kühlen, und eine Entgasungsvorrichtung (7), die ausgebildet ist, Gase (G), die sich während des Betriebs der Batteriezelle (4) in dem Batteriegehäuse (3) ansammeln, aus dem Batteriegehäuse (3) herauszusaugen. Es wird vorgeschlagen, dass die Entgasungsvorrichtung (7) eine Saugstrahlpumpe (70) aufweist, die ausgebildet ist, anhand des zirkulierenden Kühlmediums als Treibmedium einen Saugdruck zu erzeugen und die Gase (G) aus dem Batteriegehäuse (3) herauszusaugen.

## Beschreibung

Die vorliegende Erfindung betrifft ein Batteriemodulsystem mit den Merkmalen des Anspruchs 1 und ein Kraftfahrzeug mit den Merkmalen des Anspruchs 10.

Leistungsstarke wiederaufladbare Batteriezellen, wie sie beispielsweise in Form von Lithium-Ionen-Akkus als Antriebsbatterien für Elektrokraftfahrzeuge verwendet werden, sind in der Regel in geschlossenen Batteriegehäusen angeordnet. Die Gesamtheit aus Batteriegehäuse samt einer oder mehrerer darin angeordneter Batteriezellen kann als Batteriemodul bezeichnet werden. Während des Ladens und Entladens (bzw. des Betriebs) unterliegt eine Batteriezelle Temperaturschwankungen und somit auch Schwankungen des Drucks innerhalb des Batteriegehäuses. Zur Vermeidung von Gehäuseverformungen sowie Undichtigkeiten aufgrund eines zu hohen Unter- bzw. Überdrucks, sind an dem Batteriegehäuse Druckausgleichselemente, beispielsweise in Form von Druckausgleichsmembranen, angeordnet, die einen Druckausgleich zwischen dem Inneren des Batteriegehäuses mit der Umgebung des Batteriegehäuses ermöglichen.

Die vorbeschriebenen Batteriezellen produzieren während des Betriebs Gase, die ebenfalls aus dem Batteriegehäuse entweichen müssen. Moderne Batteriemodule weisen allerdings eine Vielzahl von dicht gepackten Batteriezellen auf, die sich unter Last ausdehnen und dadurch den Gasfluss bzw. das Entweichen der Gase über die Druckausgleichselemente erschweren. Die entstehenden Gase sind überdies häufig schwerer als Luft und neigen daher dazu, sich z.B. in Engstellen zu sammeln.

Aufgabe der vorliegenden Erfindung ist es, ein Batteriemodulsystem, insbesondere für ein Kraftfahrzeug, bereitzustellen, bei dem die während des Betriebs der Batteriezelle entstehenden Gase in einfacher Weise prozesssicher und insbesondere bedarfsgerecht aus dem Batteriegehäuse entfernt werden.

Diese Aufgabe wird durch ein Batteriemodulsystem mit den Merkmalen des Anspruchs 1 und ein Kraftfahrzeug mit den Merkmalen des Anspruch 10 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Das erfindungsgemäße Batteriemodulsystem weist auf:
- ein Batteriemodul mit einer in einem Batteriegehäuse angeordneten Batteriezelle,
- einen Kühlkreislauf, der ausgebildet ist, die Batteriezelle mittels eines zirkulierenden Kühlmediums zu kühlen, und
- eine Entgasungsvorrichtung, die ausgebildet ist, Gase, die sich während des Betriebs der Batteriezelle in dem Batteriegehäuse ansammeln, aus dem Batteriegehäuse herauszusaugen,
wobei die Entgasungsvorrichtung eine Saugstrahlpumpe aufweist, die ausgebildet ist, anhand des zirkulierenden Kühlmediums als Treibmedium einen Saugdruck zu erzeugen und die Gase aus dem Batteriegehäuse herauszusaugen.

Der Erfindung liegt die Idee zugrunde, die sich während des Betriebs der Batteriezelle in dem Batteriegehäuse ansammelnden Gase aus dem Batteriegehäuse herauszusaugen, so dass auch Gase, die sich in Engstellen oder an einem Gehäuseboden sammeln effektiv aus dem Gehäuse entfernt werden können. Hierbei wird die für das Bereitstellen des Saugdrucks benötige Pumpe als Saugstrahlpumpe ausgeführt, die mittels des zur Kühlung der Batteriezelle zirkulierenden Kühlmediums, z.B. Luft, Wasser oder einem anderen Kühlmittel, angetrieben wird. Die Saugstrahlpumpe muss dadurch beispielsweise nicht mit elektrischer Energie versorgt werden, um den Saugdruck zu erzeugen, wodurch sich das Verlegen von zusätzlichen elektrischen Leitungen erübrigt. Zur Herstellung des Saugdrucks in wesentlichem Maße auf die bereits vorhandenen Komponenten des Batteriemodulsystem zurückgegriffen, so dass die erfindungsgemäße Lösung mit wenig Aufwand und energieeffizient realisiert werden kann.

Eine Saugstrahlpumpe ist eine Pumpe, in der die Pumpwirkung durch einen Fluidstrahl (Treibmedium) erzeugt wird, der durch Impulsaustausch ein anderes Medium (Saugmedium) ansaugt und fördert. Erfindungsgemäß fungiert das Kühlmedium als Treibmedium, während die im Laufe des Betriebs der Batteriezelle entstehenden Gase das Saugmedium darstellen. Die Saugstrahlpumpe kann hierbei in einer Vorlaufleitung oder in einer Rücklaufleitung des Kühlkreislaufs installiert sein.

Als Batteriezelle kommen grundsätzlich alle Batteriearten in Betracht, bei denen während des Betriebs Gase entstehen, die aus dem Batteriegehäuse abgeführt werden müssen, insbesondere Lithium-Ionen-Akkus oder Feststoffbatterien bzw. (All-)solid-state-Batterien. Das Batteriemodul ist insbesondere eine Antriebsbatterie für ein Elektrokraftfahrzeug.

Der Kühlkreislauf ist insbesondere ein geschlossener Kühlkreislauf, d.h. das Kühlmedium fließt zur Kühlung der Batteriezelle in einem geschlossenen Kühlmedienleitungsabschnitt des Kühlkreislaufs innerhalb des Batteriegehäuses, an dem Batteriegehäuse oder in einem Nahbereich des Batteriegehäuses.

In einer bevorzugten Ausgestaltung des erfindungsgemäßen Batteriemodulsystems ist die Entgasungsvorrichtung ausgebildet, die mittels der Saugstrahlpumpe angesaugten Gase dem Kühlkreislauf zuzuführen, so dass die Gase über das zirkulierende Kühlmedium abtransportiert werden. In anderen Worten werden die angesaugten Gase dem Kühlmedium beigemischt, so dass diese effizient über den Kühlkreislauf abtransportiert werden können.

In einer weiteren bevorzugten Ausgestaltung des erfindungsgemäßen Batteriemodulsystems weist der Kühlkreislauf einen Sammelbehälter auf, der dazu ausgebildet ist, die durch das Kühlmedium abtransportierten Gase zu sammeln. Die in das Kühlmedium eingemischten Gase können auf diese Weise wieder aus dem Kühlmedium entfernt werden. Insbesondere weist das Kühlmedium eine höhere Dichte auf als die Gase, so dass eine Trennung zwischen den angesaugten Gasen und dem Kühlmedium vereinfacht ist. Beispielsweise ist das Kühlmedium eine Flüssigkeit, z.B. Wasser oder ein anderes flüssiges Kühlmittel. Wenn der Sammelbehälter beispielsweise nur zum Teil mit Kühlmedium befüllt ist, können die darin enthaltenen Gase in einen oberen Bereich des Sammelbehälters aufsteigen und so aus dem Kühlmedium abgetrennt werden. Bevorzugt weist der Sammelbehälter ein Überdruckventil auf, das ausgebildet ist, ab einem vorbestimmten Innendruck im Sammelbehälter ein Entweichen der gesammelten Gase in eine Umgebung des Batteriemodulsystems oder in einen separaten Auffangbehälter zu erlauben. Besonders bevorzugt ist der Sammelbehälter ein Kühlmedienbehälter ist. Der Kühlmedienbehälter, auch Kühlmedienüberlaufbehälter oder Kühlmedienausgleichsbehälter genannt, ist in den meisten Kühlkreisläufen für mobile Anwendungen vorhanden und ausgebildet, den Druck im Kühlkreislauf über ein Überdruckventil zu reduzieren, wenn sich das Kühlmedium aufgrund erhöhter Temperatur ausdehnt. Durch die Verwendung des Kühlmedienbehälters als Sammelbehälter für das aus dem Batteriegehäuse abgesaugte Gas wird in wesentlichem Maße auf die bereits vorhandenen Komponenten des Batteriemodulsystem zurückgegriffen, so dass das Sammeln des Gases mit wenig Aufwand und energieeffizient realisiert werden kann. Moderne Fahrzeuge haben häufig Kühlkreisläufe mit mehreren Kühlmittelbehältern, die im Rahmen der vorliegenden Erfindung als Sammelbehälter fungieren können, so dass die Gase effizient gesammelt und ggf. durch ein Überdruckventil abgelassen werden können.

In einer weiteren bevorzugten Ausgestaltung des erfindungsgemäßen Batteriemodulsystems weist die Entgasungsvorrichtung eine Saugleitung mit einem Einlass im Batteriegehäuse und einem mit einem Saugmedieneinlass der Saugstrahlpumpe fluidleitend verbundenen Auslass auf. Insbesondere ist der Auslass der Saugleitung außerhalb des Batteriegehäuses angeordnet.

In einer weiteren bevorzugten Ausgestaltung des erfindungsgemäßen Batteriemodulsystems weist die Entgasungsvorrichtung ein Ventil auf, das ausgebildet ist, die Saugleitung zu öffnen oder zu verschließen. Auf diese Weise kann ein Entgasungsvorgang bedarfsgerecht gesteuert werden. Bevorzugt ist das Ventil ausgebildet, die Saugleitung in Abhängigkeit einer Temperatur des Kühlmediums und/oder in Abhängigkeit einer im Inneren des Batteriegehäuses gemessenen Temperatur und/oder in vorbestimmten Zeitintervallen zu öffnen oder zu verschließen. Der Betrieb der Batteriezelle, bei dem die abzusaugenden Gase entstehen, geht mit einer bestimmten Temperatur des Kühlmediums oder einer bestimmten Temperatur im Inneren des Batteriegehäuses einher, so dass es in einigen Anwendungsfällen sinnvoll sein kann, den Entgasungsvorgang temperaturabhängig einzuleiten. Insbesondere weist das Batteriemodul eine Steuereinheit auf, die dazu ausgebildet ist, das Ventil der Entgasungsvorrichtung in Abhängigkeit bei Vorliegen einer vorbestimmten Bedingung zu öffnen oder zu schließen. Insbesondere weist das Batteriemodulsystem einen mit der Steuereinheit signalübertragenden Temperatursensor auf, der dazu ausgebildet ist, die Temperatur des Kühlmediums und/oder die Temperatur im Inneren des Batteriegehäuses zu erfassen, wobei die Steuereinheit ausgebildet ist, bei Überschreitung eines Schwellenwertes für die erfasste Temperatur das Ventil zu öffnen. Alternativ oder zusätzlich kann die Steuereinheit ausgebildet sein, das Ventil in regelmäßigen Zeitabständen zu öffnen, um eine regelmäßige Entgasung des Batteriegehäuses zu veranlassen.

Insbesondere ist das Ventil in die Saugstrahlpumpe integriert und weist ein Verschlusselement auf, welches mittels eines Aktors zwischen einer verschlossenen Position des Ventils und einer geöffneten Position des Ventils verschieblich ist, wobei der Aktor eine Formgedächtnislegierung enthält und dazu ausgebildet ist, bei durch die Saugstrahlpumpe strömendem Kühlmedium Wärme von dem Kühlmedium aufzunehmen und das Verschlusselement in Abhängigkeit der aufgenommenen Wärme zu bewegen. Formgedächtnislegierungen (englisch shape memory alloy, Abkürzung SMA) sind spezielle Metalllegierungen, die im kalten Zustand verformt werden können, aber bei Erwärmung in ihre vorverformte ("erinnerte") Form zurückkehren. Dieser Effekt basiert auf dem Vorhandensein einer Austenit genannten Hochtemperaturphase und einer Martensit genannten Niedertemperaturphase bei derartigen Legierungen. Durch die von dem Kühlmedium aufgenommenen Wärme und dem daraus resultierenden Übergang der Formgedächtnislegierung in ihre Hochtemperaturphase verändert der Aktor seine Form und wirkt derart auf das Verschlusselement ein, dass sich das Verschlusselement bewegt und die Öffnung beispielsweise zumindest teilweise freigegeben wird. Auf diese Weise kann eine von der Temperatur des Kühlmediums abhängige Schaltung des Ventils realisiert werden. Insbesondere kann auf die Verwendung eines separaten Temperatursensors zur Erfassung der Temperatur des Kühlmediums in Verbindung mit dem Ventil verzichtet werden. Bevorzugt ist das Ventil dazu ausgebildet, die Saugleitung freizugeben, wenn der Aktor eine bestimmte Menge Wärme von dem Kühlmedium aufgenommen hat. Der Aktor kann eine Einweg-Effekt-Formgedächtnislegierung oder eine Zweiweg-Effekt-Formgedächtnislegierung aufweisen. Der Einweg-Effekt ist durch eine einmalige Formänderung beim Aufheizen eines zuvor verformten Aktors gekennzeichnet. Das erneute Abkühlen bewirkt keine Formänderung, so dass der Aktor zum Schließen des Ventils z.B. mit einem Rückstellelement verformt werden muss. Beim Zweiweg-Effekt führt ein erneutes Abkühlen doch zu einer entsprechenden Formänderung in die Form zurück, die vor dem Aufheizen vorhanden war. Der Vorteil der Verwendung einer Zweiweg-Effekt-Formgedächtnislegierung ist, dass der Aktor beim Abkühlen von selbst in seine Ausgangsposition zurückkehrt und nicht von einem Rückstellelement in diese gebracht werden muss. Ein gegebenenfalls für das Verschlusselement vorgesehene Rückstellelement kann daher kompakter ausgestaltet werden. Bevorzugt weist das Ventil ein Rückstellelement auf, das dazu ausgebildet ist, eine entgegen einer Wirkrichtung des Aktors gerichtete Rückstellkraft auf das Verschlusselement aufzubringen, wenn sich das Verschlusselement nicht in der verschlossenen Position des Ventils befindet. Aktor und/oder Rückstellelement sind vorzugsweise nach Art einer Schraubenfeder wendelförmig ausgebildet. Statt einer Formgedächtnislegierung kann der Aktor ein Bimetall aufweisen, welches dem Aktor die Eigenschaft einer temperaturabhängigen Ausdehnung und damit einhergehenden Positionsveränderung des Verschlusselements verleiht, so dass die Saugleitung freigegeben wird, wenn der Aktor eine bestimmte Menge Wärme von dem Kühlmedium aufgenommen hat.

In einer weiteren bevorzugten Ausgestaltung des erfindungsgemäßen Batteriemodulsystems weist die Entgasungsvorrichtung ein Rückschlagventil auf, das ausgebildet ist, einen Fluidstrom durch die Saugleitung lediglich in einer Strömungsrichtung von dem Batteriegehäuse zu der Saugstrahlpumpe zu erlauben. Auf diese Weise wird verhindert, dass Gas oder Kühlmedium in das Batteriegehäuse eindringen kann. Insbesondere ist das Rückschlagventil in die Saugstrahlpumpe integriert und ist vorzugsweise dazu ausgebildet, die Saugleitung in Abhängigkeit einer Temperatur des Kühlmediums zu verschließen. Hierzu kann das Rückschlagventil analog zu dem vorbeschriebenen Ventil ein durch einen sich temperatürabhängig ausdehnenden Aktor bewegliches Verschlusselement aufweisen. Bevorzugt ist das vorbeschriebene Ventil als Rückschlagventil ausgebildet.

In einer weiteren bevorzugten Ausgestaltung des erfindungsgemäßen Batteriemodulsystems weist dieses ein Druckausgleichselement auf, das an dem Batteriegehäuse angeordnet und ausgebildet ist, einen Druckausgleich zwischen dem Inneren des Batteriegehäuse und einer Umgebung des Batteriegehäuses zu ermöglichen. Das Druckausgleichselement kann den durch den Saugdruck erzeugten Unterdruck im Batteriegehäuse ausgleichen, so dass es nicht zu Verformungen des Batteriegehäuses oder zu Undichtigkeiten kommt. Insbesondere ist ein Einlass der Saugleitung von dem Druckausgleichselement beabstandet angeordnet.

Gemäß dem bereits vor- sowie dem weiter unten nachbeschriebenen wird die eingangs gestellte Aufgabe auch durch ein Kraftfahrzeug mit den Merkmalen des Anspruchs 10 gelöst. Die mit dem erfindungsgemäßen Batteriemodulsystem realisierten Vorteile lassen sich in analoger Weise mit dem erfindungsgemäßen Kraftfahrzeug erzielen. Insbesondere ist das Batteriemodul eine Antriebsbatterie des Kraftfahrzeugs.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und der Zeichnung entnehmen. In der schematischen Figur zeigt:

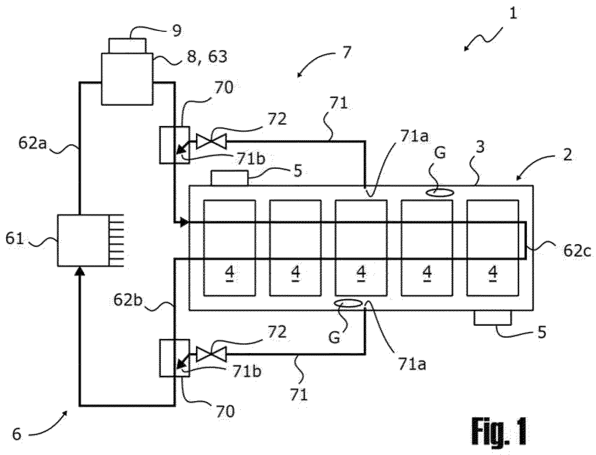

- Fig. 1: ein Ausführungsbeispiel eines erfindungsgemäßen Brennstoffzellensystems.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

Fig. 1 zeigt ein Ausführungsbeispiel eines erfindungsgemäßen Batteriemodulsystems 1 aufweisend ein Batteriemodul 2 mit mehreren in einem Batteriegehäuse 3 angeordneten Batteriezellen 4. Ferner weist das Batteriemodulsystem 1 einen Kühlkreislauf 6 auf, der ausgebildet ist, die Batteriezellen 4 mittels eines zirkulierenden Kühlmediums zu kühlen. Der Kühlkreislauf 6 weist hierzu eine von einem Kühler 61 abgehende Vorlaufleitung 62a auf, die den Batteriezellen gekühltes Kühlmedium zuführt. Ein zum Kühlen der Batteriezellen 4 vorgesehener Wärmeaustauschleitungsabschnitt 62c des Kühlkreislaufs 6 ist fluiddicht gegenüber dem Inneren des Batteriegehäuses 3 ausgebildet. Ferner weist der Kühlkreislauf 6 eine Rücklaufleitung 62b auf, die das von den Batteriezellen 4 erwärmte Kühlmedium wieder dem Kühler 61 zuführt. Der Kühlkreislauf 6 kann eine Pumpe oder eine andere Fördervorrichtung aufweisen (nicht gezeigt), die das Kühlmedium durch die Leitungen 62a, 62b, 62c des Kühlkreislaufs 6 zirkuliert.

Das Batteriemodulsystem 1 weist ferner eine Entgasungsvorrichtung 7 auf, die ausgebildet ist, Gase G, die sich während des Betriebs der Batteriezellen 4 in dem Batteriegehäuse 3 ansammeln, aus dem Batteriegehäuse 3 herauszusaugen. Im vorliegenden Fall weist die Entgasungsvorrichtung 7 hierzu eine Saugleitung 71 auf, deren Einlass 71a im Batteriegehäuse 3 und deren Auslass 71b außerhalb des Batteriegehäuses 3 angeordnet ist.

Die Entgasungsvorrichtung 7 weist ferner eine Saugstrahlpumpe 70 auf, die ausgebildet ist, anhand des zirkulierenden Kühlmediums als Treibmedium einen Saugdruck zu erzeugen und die Gase G aus dem Batteriegehäuse 3 herauszusaugen. Hierzu ist der Auslass 71b der Saugleitung 71 mit einem Saugmedieneinlass der Saugstrahlpumpe 70 fluidleitend verbunden. Die Entgasungsvorrichtung 7 weist ferner ein Ventil 72 auf, das ausgebildet ist, die Saugleitung 71 bedarfsgerecht zu öffnen oder zu verschließen. Bevorzugt ist zwischen dem Ventil 72 und dem Auslass 71b der Saugleitung ein Rückschlagventil (nicht gezeigt) angeordnet, um einen Eintritt von Kühlmedium in das Batteriegehäuse zu verhindern. Mehrere Druckausgleichselemente 5 sind an dem Batteriegehäuse 3 angeordnet und ermöglichen einen Druckausgleich zwischen dem Inneren des Batteriegehäuses 3 und einer Umgebung des Batteriegehäuses 3, so dass ein durch das Ansaugen der Gase G entstehender Unterdruck im Inneren des Batteriegehäuses problemlos ausgeglichen werden kann.

Im vorliegenden Fall weist die Entgasungsvorrichtung 7 zwei mit einer jeweiligen Saugleitung 71 verbundener Saugstrahlpumpen 70 auf, wobei eine erste Saugstrahlpumpe 70 in der Vorlaufleitung 62a des Kühlkreislaufs 6 installiert ist und eine zweite Saugstrahlpumpe 70 in der Rücklaufleitung installiert ist, was eine noch effektivere Entgasung ermöglicht. Es kann in einigen Ausführungsformen vorteilhaft sein, alternativ oder zusätzlich eine Saugstrahlpumpe innerhalb des Batteriegehäuses 3 in dem Wärmeaustauschleitungsabschnitt 62c vorzusehen (nicht gezeigt).

Die Entgasungsvorrichtung 7 ist ausgebildet, die Gase G dem Kühlkreislauf 6 zuzuführen, so dass die Gase über das zirkulierende Kühlmedium abtransportiert werden. Der Kühlkreislauf 6 weist einen Sammelbehälter 8 auf, der dazu ausgebildet ist, die durch das Kühlmedium abtransportierten Gase G zu sammeln. Der Sammelbehälter 8 weist ein Überdruckventil 9 auf, das ausgebildet ist, ab einem vorbestimmten Innendruck im Sammelbehälter 8 ein Entweichen der gesammelten Gase G in eine Umgebung des Batteriemodulsystems 1 oder in einen separaten Auffangbehälter (nicht gezeigt) zu erlauben. Bevorzugt wird ein Kühlmedienbehälter 63 des Kühlkreislaufs 6 gleichzeitig als Sammelbehälter 8 für die abtransportierten Gase G verwendet.

Vorzugsweise ist das Ventil 72 ausgebildet ist, die Saugleitung 71 in Abhängigkeit einer Temperatur des Kühlmediums und/oder in Abhängigkeit einer im Inneren des Batteriegehäuses 3 gemessenen Temperatur und/oder in vorbestimmten Zeitintervallen zu öffnen oder zu verschließen.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Batteriemodulsystem (1), insbesondere für ein Batteriezellenfahrzeug, aufweisend
ein Batteriemodul (2) mit einer in einem Batteriegehäuse (3) angeordneten Batteriezelle (4),
einen (geschlossenen) Kühlkreislauf (6), der ausgebildet ist, die Batteriezelle (4) mittels eines zirkulierenden Kühlmediums zu kühlen, und
eine Entgasungsvorrichtung (7), die ausgebildet ist, Gase (G), die sich während des Betriebs der Batteriezelle (4) in dem Batteriegehäuse (3) ansammeln, aus dem Batteriegehäuse (3) herauszusaugen,
wobei die Entgasungsvorrichtung (7) eine Saugstrahlpumpe (70) aufweist, die ausgebildet ist, anhand des zirkulierenden Kühlmediums als Treibmedium einen Saugdruck zu erzeugen und die Gase (G) aus dem Batteriegehäuse (3) herauszusaugen.

2. Batteriemodulsystem (1) nach Anspruch 1, wobei die Entgasungsvorrichtung (7) ausgebildet ist, die aus dem Batteriegehäuse (3) herausgesaugten Gase (G) dem Kühlkreislauf (6) zuzuführen, so dass die Gase (G) über das zirkulierende Kühlmedium abtransportiert werden.

3. Batteriemodulsystem (1) nach Anspruch 2, wobei der Kühlkreislauf (6) einen Sammelbehälter (8) aufweist, der dazu ausgebildet ist, die durch das Kühlmedium abtransportierten Gase (G) zu sammeln.

4. Batteriemodulsystem (1) nach Anspruch 3, wobei der Sammelbehälter (8) ein Überdruckventil (9) aufweist, das ausgebildet ist, ab einem vorbestimmten Innendruck im Sammelbehälter (8) ein Entweichen der gesammelten Gase (G) in eine Umgebung des Batteriemodulsystems (1) oder in einen separaten Auffangbehälter zu erlauben.

5. Batteriemodulsystem (1) nach Anspruch 3 oder 4, wobei der Sammelbehälter (8) ein Kühlmedienbehälter ist.

6. Batteriemodulsystem (1) nach einem der vorangehenden Ansprüche, wobei die Entgasungsvorrichtung (7) eine Saugleitung (71) mit einem Einlass (71a) im Batteriegehäuse (3) und einem mit einem Saugmedieneinlass der Saugstrahlpumpe (70) fluidleitend verbundenen Auslass (71b) aufweist.

7. Batteriemodulsystem (1) nach Anspruch 6, wobei die Entgasungsvorrichtung (7) ein Ventil (72) aufweist, das ausgebildet ist, die Saugleitung (71) zu öffnen oder zu verschließen.

8. Batteriemodulsystem (1) nach Anspruch 7, wobei das Ventil (72) ausgebildet ist, die Saugleitung (71) in Abhängigkeit einer Temperatur des Kühlmediums und/oder in Abhängigkeit einer im Inneren des Batteriegehäuses (3) gemessenen Temperatur und/oder in vorbestimmten Zeitintervallen zu öffnen oder zu verschließen.

9. Batteriemodulsystem (1) nach einem der vorangehenden Ansprüche aufweisend ein Druckausgleichselement (5), das an dem Batteriegehäuse (3) angeordnet und ausgebildet ist, einen Druckausgleich zwischen dem Inneren des Batteriegehäuses (3) und einer Umgebung des Batteriegehäuses (3) zu ermöglichen.

10. Kraftfahrzeug mit einem Batteriemodulsystem (1) nach einem der vorangehenden Ansprüche.
